# EUROPEAN PATENT APPLICATION

(11) **EP 4 776 814 A1**
(43) Date of publication of application: **15.07.2026**
(21) Application number: 24938107.0
(22) Date of filing: 26.11.2024
(51) Int. Cl.: H10K 59/82

(54) **DISPLAY PANEL AND DISPLAY DEVICE**

(30) Priority: 20.11.2024 CN 202411667430
(71) Applicant: Wuhan China Star Optoelectronics Semiconductor Display Technology Co., Ltd., Wuhan, Hubei 430079 (CN)
(72) Inventor: YANG, Guoqiang, Wuhan, Hubei 430079 (CN)
(74) Representative: Zimmermann, Tankred Klaus
(86) International application number: PCT/CN2024/134444
(87) International publication number: WO 2026/107847

(57) **Abstract**

A display panel and a display device are provided by embodiments of the present application. In the display panel and the display device of the embodiments of the present application, circuit modules correspondingly connected to sub-pixels in a display transparent region are disposed in the display transparent region.

## Description

This application claims priority to Chinese Patent Application No. 202411667430.9, filed on November 20, 2024, the disclosure of which is incorporated herein by reference in its entirety.

### TECHNICAL FIELD

The present application relates to the technical field of display, and in particular to a display panel and a display device.

### BACKGROUND

In a current organic light-emitting diode (OLED) panel, a camera is disposed at a bottom of a screen, and the panel above the camera can still display normally and take pictures at the same time. This is under-screen camera technology.

During a process of researching and practicing existing technologies, Inventors of the present application have found that based on the current under-screen camera technology, in order to improve light transmittance of a region of a display panel corresponding to the camera, pixel driving circuits connected to sub-pixels in a camera region are disposed outside the camera region. However, this processing method makes that a duration for the sub-pixels located at a center of the camera region to receive signals is much longer than a duration for the sub-pixels located at a periphery of the camera region to receive signals. That is, uniformity of the duration of the sub-pixels in the camera region to receive signals is poor.

### SUMMARY

A display panel and a display device are provided by the embodiments of the present application, so as to balance light-transmitting performance of a display light-transmitting region and uniformity of duration of sub-pixels in the display light-transmitting region to receive signals.

In one aspect, a display panel is provided by the embodiments of the present application. The display panel includes a display region and a display light-transmitting region. The display region is located on at least one side of the display light-transmitting region. The display panel further includes:
a plurality of sub-pixels disposed in the display light-transmitting region;
a plurality of circuit modules disposed in the display light-transmitting region, where each of the circuit modules includes at least three pixel circuits, and each of the pixel circuits is connected to at least two of the sub-pixels; and
a plurality of signal traces extending from the display region to the display light-transmitting region, where the signal traces are configured to provide electrical signals to the pixel circuits.

In the display panel from a top-view perspective, the plurality of signal traces intersect to form a plurality of intersection regions. At least some circuit modules of the plurality of circuit modules are disposed in the intersection regions. Each of the circuit modules is correspondingly disposed overlapping some sub-pixels of the plurality of sub-pixels. The signal traces are disposed partially overlapping some sub-pixels of the plurality of sub-pixels.

In another aspect, a display device is provided by the embodiments of the present application. The display device includes a camera module and the display panel according to any one of the above-mentioned embodiments. The camera module is disposed on a backlight side of the display panel, and the camera module is disposed corresponding to the display light-transmitting region.

### BRIEF DESCRIPTION OF THE DRAWINGS

FIG. 1 is a schematic top plan view of a display panel according to some embodiments of the present application.
FIG. 2 is a schematic cross-sectional plan view of the display panel according to some embodiments of the present application.
FIG. 3 is a schematic top plan view of a display region of the display panel according to some embodiments of the present application.
FIG. 4 is a first schematic top plan view of a display light-transmitting region of the display panel according to some embodiments of the present application.
FIG. 5 is a schematic view showing a circuit connection of the display panel corresponding to the embodiments in FIG. 4.
FIG. 6 is a schematic enlarged view in FIG. 4.
FIG. 7 is a schematic view of retained light shielding layer and sub-pixels in FIG. 6.
FIG. 8 is a schematic enlarged view of a part M in FIG. 7.
FIG. 9 is a diffraction simulation diagram based on the light shielding layer in FIG. 7.
FIG. 10 is a second schematic top plan view of the display light-transmitting region of the display panel according to some embodiments of the present application.
FIG. 11 is a schematic view showing a circuit connection of the display panel corresponding to the embodiments in FIG. 10.
FIG. 12 is a schematic partial enlarged view in FIG. 10.
FIG. 13 is a schematic view of retained light shielding layer and sub-pixels in FIG. 12.
FIG. 14 is a schematic enlarged view of a part N in FIG. 13.
FIG. 15 is a diffraction simulation diagram based on the light shielding layer in FIG. 13.
FIG. 16 is a third schematic top plan view of the display light-transmitting region of the display panel according to some embodiments of the present application.
FIG. 17 is a fourth schematic top plan view of the display light-transmitting region of the display panel according to some embodiments of the present application.
FIG. 18 is a fifth schematic top plan view of the display light-transmitting region of the display panel according to some embodiments of the present application.
FIG. 19 is a sixth schematic top plan view of the display light-transmitting region of the display panel according to some embodiments of the present application.
FIG. 20 is a schematic top plan view of a display device according to some embodiments of the present application.
FIG. 21 is a schematic cross-sectional plan view of the display device according to some embodiments of the present application.

### DETAILED DESCRIPTION

The technical proposals in the embodiments of the present application will be described clearly and completely hereafter with reference to accompanying drawings. Apparently, the described embodiments are merely a part of but not all embodiments of the present application. All other embodiments obtained by persons of ordinary skill in the art based on the embodiments of the present application without creative efforts shall fall within a protection scope of the present application. Furthermore, it should be understood that the specific embodiments described herein are intended to illustrate and explain the present application only and are not intended to limit the present application. In this present application, location terms such as "up" and "down", without description to the contrary, generally refer to up and down in the actual use or operating state of the device, specifically the drawing direction in the drawings. The terms "inside" and "outside" are for the outline of the device. The terms "first", "second", "third", etc. are used merely as indications and do not impose numerical requirements or establish order.

The embodiments of the present application provide a display panel and a display device, which will be described in detail below. It should be noted that the order of description of the following embodiments is not a limitation on the preferred order of the embodiments.

A display panel is provided by the embodiments of the present application. The display panel includes a display region and a display light-transmitting region. The display region is located on at least one side of the display light-transmitting region. The display panel further includes:
a plurality of sub-pixels disposed in the display light-transmitting region;
a plurality of circuit modules disposed in the display light-transmitting region, where each of the circuit modules includes at least three pixel circuits, and each of the pixel circuits is connected to at least two of the sub-pixels; and
a plurality of signal traces extending from the display region to the display light-transmitting region, where the signal traces are configured to provide electrical signals to the pixel circuits.

In the display panel from a top-view perspective, the plurality of signal traces intersect to form a plurality of intersection regions. At least some circuit modules of the plurality of circuit modules are disposed in the intersection regions. Each of the circuit modules is correspondingly disposed overlapping some sub-pixels of the plurality of sub-pixels. The signal traces are disposed partially overlapping some sub-pixels of the plurality of sub-pixels.

Optionally, in some embodiments of the present application, the plurality of signal traces include a plurality of scanning lines, a plurality of data lines, a plurality of reset traces, and an anode power supply trace. An extending direction of each of the scanning lines and an extending direction of each of the reset traces both intersect with an extending direction of each of the data lines. The anode power supply trace includes a plurality of first trace parts and a plurality of second trace parts. The first trace parts and the second trace parts are cross-connected to form a mesh structure. Intersection points between the first trace parts and the second trace parts are located in the intersection regions. The data lines and the second trace parts are arranged in a first direction. The scanning lines, the reset traces, and the first trace parts are arranged in a second direction interesting with the first direction.

At least one of the data lines and the second trace parts is disposed overlapping some sub-pixels of the plurality of sub-pixels. At least one of the scanning lines, the reset traces, and the first trace parts is disposed overlapping some sub-pixels of the plurality of sub-pixels.

Optionally, in some embodiments of the present application, the plurality of sub-pixels include a plurality of minimum repeating units arranged in an array. Each of the minimum repeating units includes at least two first sub-pixels, at least two second sub-pixels, and at least two third sub-pixels. The first sub-pixels, the second sub-pixels, and the third sub-pixels have different light-emitting colors.

Each of the circuit modules is correspondingly connected to one of the minimum repeating units. In each of the circuit modules, one of a plurality of pixel circuits is connected to at least two of the first sub-pixels, another one of the plurality of pixel circuits is connected to at least two of the second sub-pixels, and yet another one of the plurality of pixel circuits is connected to at least two of the third sub-pixels.

Optionally, in some embodiments of the present application, each of the circuit modules is correspondingly disposed in a region where one of the minimum repeating units is located.

Optionally, in some embodiments of the present application, each of the minimum repeating units includes two of the first sub-pixels, two of the second sub-pixels, and four of the third sub-pixels. Each of the circuit modules includes three of the pixel circuits. One of the three of the pixel circuits is connected to the two of the first sub-pixels, another one of the three of the pixel circuits is connected to the two of the second sub-pixels, and yet another one of the three of the pixel circuits is connected to the four of the third sub-pixels.

In each of the minimum repeating units of the display panel from the top-view perspective, the two of the first sub-pixels and the two of the second sub-pixels are arranged at four corner regions of a corresponding one of the circuit modules. The two of the first sub-pixels and the two of the second sub-pixels are arranged partially overlapping the corresponding one of the circuit modules, respectively. The corresponding one of the circuit modules is disposed overlapping one of the four of the third sub-pixels. At least one of the data lines and the second trace parts is disposed partially overlapping another one of the four of the third sub-pixels. At least one of the scanning lines, the reset traces, and the first trace parts is disposed partially overlapping yet another one of the four of the third sub-pixels.

Optionally, in some embodiments of the present application, each of the minimum repeating units includes four of the first sub-pixels, four of the second sub-pixels, and eight of the third sub-pixels. Each of the circuit modules includes four of the pixel circuits. One of the four of the pixel circuits is connected to the four of the first sub-pixels, another one of the four of the pixel circuits is connected to the four of the second sub-pixels, and remaining two of the four of the pixel circuits are each connected to four of the eight of the third sub-pixels.

In each of the minimum repeating units of the display panel from the top-view perspective, one of the four of the first sub-pixels is disposed overlapping a corresponding one of the circuit modules. Two of the four of the second sub-pixels and four of the eight of the third sub-pixels are disposed partially overlapping the corresponding one of the circuit modules, respectively. At least one of the data lines and the second trace parts is disposed partially overlapping another one of the four of the second sub-pixels. At least one of the scanning lines, the reset traces, and the first trace parts is disposed partially overlapping another one of the four of the first sub-pixels. At least one of the scanning lines, the reset traces, and the first trace parts is disposed partially overlapping the two, partially overlapping the corresponding one of the circuit modules, of the four of the second sub-pixels.

Optionally, in some embodiments of the present application, the display panel further includes a light shielding layer located in the display light-transmitting region. The light shielding layer is located on a side of the circuit modules away from the sub-pixels. The light shielding layer includes a plurality of first light shielding parts extending along the first direction and a plurality of second light shielding parts extending along the second direction. The plurality of first light shielding parts and the plurality of second light shielding parts are cross-connected to form a plurality of light-transmitting openings. Third light shielding parts are formed at intersection positions between the first light shielding parts and the second light shielding parts.

In the display light-transmitting region of the display panel from the top-view perspective, the scanning lines, the reset traces, and the first trace parts are disposed overlapping the first light shielding parts. The data lines and the second trace parts are disposed overlapping the second light shielding parts. The circuit modules are disposed overlapping the third light shielding parts.

Optionally, in some embodiments of the present application, the plurality of the sub-pixels are arranged in rows along the first direction. The plurality of the sub-pixels are arranged in columns along the second direction. One row of the sub-pixels in every adjacent four of the rows of the sub-pixels is disposed overlapping the first light shielding parts. One column of the sub-pixels in every at least adjacent four of the columns of the sub-pixels is disposed overlapping the circuit modules.

Optionally, in some embodiments of the present application, based on each of the minimum repeating units including two of the first sub-pixels, two of the second sub-pixels, and four of the third sub-pixels, the first sub-pixels and the second sub-pixels are alternately arranged in color-mixed sub-pixel rows along the first direction. A plurality of third sub-pixels are alternately arranged in solid color sub-pixel rows along the first direction. The first sub-pixels and the second sub-pixels are alternately arranged in color-mixed sub-pixel columns along the second direction. A plurality of third sub-pixels are alternately arranged in solid color sub-pixel columns along the second direction. The color-mixed sub-pixel columns and the solid color sub-pixel columns are alternately arranged in the first direction. The color-mixed sub-pixel rows and the solid color sub-pixel rows are alternately arranged in the second direction.

In the display light-transmitting region of the display panel from the top-view perspective, one row of every adjacent two of the solid color sub-pixel rows is disposed overlapping the first light shielding parts. One column of every adjacent two of the solid color sub-pixel columns is disposed overlapping the second light shielding parts. Each of the third light shielding parts is disposed partially overlapping the two of the first sub-pixels and the two of the second sub-pixels. Each of the third light shielding parts is disposed overlapping one of the four of the third sub-pixels.

Optionally, in some embodiments of the present application, based on each of the minimum repeating units including four of the first sub-pixels, four of the second sub-pixels, and eight of the third sub-pixels. The first sub-pixels and the second sub-pixels are alternately arranged in color-mixed sub-pixel rows along the first direction. A plurality of third sub-pixels are alternately arranged in solid color sub-pixel rows along the first direction. The first sub-pixels and the second sub-pixels are alternately arranged in color-mixed sub-pixel columns along the second direction. A plurality of third sub-pixels are alternately arranged in solid color sub-pixel columns along the second direction. The color-mixed sub-pixel columns and the solid color sub-pixel columns are alternately arranged in the first direction. The color-mixed sub-pixel rows and the solid color sub-pixel rows are alternately arranged in the second direction.

In the display light-transmitting region of the display panel from the top-view perspective, one row of every adjacent two of the solid color sub-pixel rows is disposed overlapping the first light shielding parts. One column of every adjacent two of the solid color sub-pixel columns is disposed overlapping the second light shielding parts. Each of the third light shielding parts is disposed overlapping one of the four of the first sub-pixels, two of the four of the second sub-pixels, and four of the eight of the third sub-pixels.

Optionally, in some embodiments of the present application, in the display light-transmitting region of the display panel from the top-view perspective, a pattern of each of the light-transmitting openings is an asymmetric pattern.

Optionally, in some embodiments of the present application, the pattern of each of the light-transmitting openings includes a first edge, a second edge, a third edge, a fourth edge, a first corner, a second corner, a third corner, and a fourth corner. The first edge and the third edge are oppositely disposed and extend along the first direction. The second edge and the fourth edge are oppositely disposed and extend along the second direction. The first corner is connected to the first edge and the second edge. The second corner is connected to the second edge and the third edge. The third corner is connected to the third edge and the fourth edge. The fourth corner is connected to the fourth edge and the first edge.

Any two of the first corner, the second corner, the third corner, and the fourth corner are disposed asymmetrically with each other.

Optionally, in some embodiments of the present application, at least one of the first corner, the second corner, the third corner, and the fourth corner includes at least one sub-corner. A number of sub-corners of the second corner is different from a number of sub-corners of the third corner, and/or, a number of sub-corners of the first corner is different from a number of sub-corners of the fourth corner.

Optionally, in some embodiments of the present application, some minimum repeating units of the plurality of the minimum repeating units are arranged in an array to form a maximum repeating unit. The plurality of the circuit modules corresponding to the some minimum repeating units are arranged in a middle region of the maximum repeating unit.

Optionally, in some embodiments of the present application, the first sub-pixels are red sub-pixels. The second sub-pixels are blue sub-pixels. The third sub-pixels are green sub-pixels. An area of each of the second sub-pixels is greater than an area of each of the first sub-pixels and an area of each of the third sub-pixels.

Accordingly, a display device is provided by the embodiments of the present application. The display device includes a camera module and the display panel according to any one of the above-mentioned embodiments. The camera module is disposed on a backlight side of the display panel, and the camera module is disposed corresponding to the display light-transmitting region.

In the display panel and the display device of the embodiments of the present application, the circuit modules correspondingly connected to the sub-pixels in the display light-transmitting region are disposed in the display light-transmitting region, so as to shorten a signal transmission distance from the circuit modules to the sub-pixels, and improve uniformity of duration of the sub-pixels in the display light-transmitting region to receive signals. Secondly, the circuit modules are disposed at intersection positions of the signal traces, so that an arrangement area of the circuit modules and the signal traces can be reduced to improve light transmittance of the display light-transmitting region. In addition, some of the sub-pixels overlap the circuit modules and some of the sub-pixels overlap the signal traces, so that a light-transmitting area is improved, thereby improving the light transmittance of the display light-transmitting region.

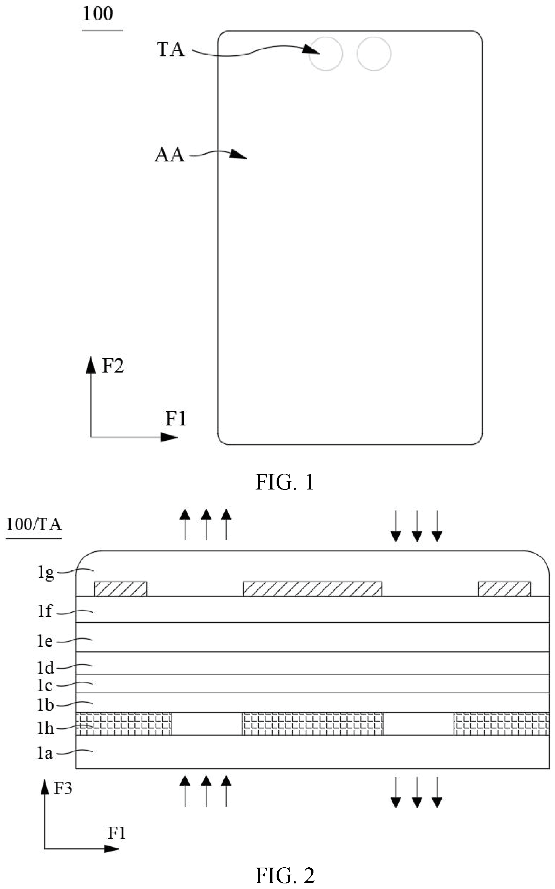

In FIG. 1 and FIG. 2, the first direction F1 may be a direction parallel to one side of the display panel 100 in a plan view, for example, may be a lateral direction of the display panel 100. The second direction F2 may be a direction parallel to another side of the display panel 100 in the plan view, and may be a longitudinal direction of the display panel 100. The third direction F3 may be a thickness direction of the display panel 100. Optionally, in some embodiments, the first direction F1 may also intersect non-perpendicularly with the second direction F2.

The display panel 100 may have a rectangular shape in the plan view, which is not limited by the embodiments. In some embodiments, the display panel 100 may have a rectangular shape with vertical corners or rounded corners in the plan view. In the plan view, the display panel 100 may include two short edges extending along the first direction F1 and two long edges extending along the second direction F2.

The display panel 100 may include a display region AA and a display light-transmitting region TA. The display region AA is located on at least one side of the display light-transmitting region TA. For example, the display region AA surrounds a periphery of the display light-transmitting region TA, or the display region AA partially surrounds the periphery of the display light-transmitting region TA.

Both the display region AA and the display light-transmitting region TA are regions including pixels for displaying images. The display light-transmitting region TA is configured to provide a light-transmitting channel for a camera module.

Optionally, the camera module may be a camera module for facial recognition. The camera module includes a transmitter and a receiver. The transmitter is configured to emit infrared light. The receiver is configured to receive the infrared light reflected from the human face.

In FIG. 1 and FIG. 2, the display panel 100 includes two display light-transmitting regions TA. One of the display light-transmitting regions TA is configured to provide a light-transmitting channel for the transmitter, and the other one of the display light-transmitting regions TA is configured to provide a light-transmitting channel for the receiver, but is not limited to thereto. For example, one of the display light-transmitting regions TA may provide the light-transmitting channels for both the transmitter and the receiver. Alternatively, the display panel 100 includes one display light-transmitting region TA, and the display light-transmitting region TA is configured to provide a light-transmitting channel for a conventional camera module, such as a single camera module, a multi-camera module, or an infrared camera module.

Optionally, the display panel 100 includes a substrate 1a, a driving circuit layer 1b, a pixel layer 1c, an encapsulation layer 1d, a touch layer 1e, an optical adhesive layer 1f, and a cover plate 1g. The driving circuit layer 1b is disposed on the substrate 1a. The pixel layer 1c is disposed on the driving circuit layer 1b. The encapsulation layer 1d is disposed on the pixel layer 1c. The touch layer 1e is disposed on the encapsulation layer 1d. The optical adhesive layer 1f is disposed on the touch layer 1e. The cover plate 1g is disposed on the optical adhesive layer 1f.

It should be understood that a structure of the display panel 100 disclosed in the present application is not limited to the above-mentioned embodiments. For example, the touch layer 1e may be disposed between the encapsulation layer 1d and the pixel layer 1c. Alternatively, a part of the touch layer 1e is integrated in the pixel layer 1c. Alternatively, at least a part of the touch layer 1e is integrated in the driving circuit layer 1b.

Optionally, the pixel layer 1c includes a plurality of sub-pixels 111. The plurality of sub-pixels 111 include first sub-pixels R, second sub-pixels B, and third sub-pixels G. Any two of the first sub-pixels, the second sub-pixels, and the third sub-pixels have different light-emitting colors. The following text will be described by taking the first sub-pixels R being red sub-pixels, the second sub-pixels B being blue sub-pixels, and the third sub-pixels G being green sub-pixels as an example, but is not limited thereto.

Optionally, based on the first sub-pixels R being red sub-pixels, the second sub-pixels B being blue sub-pixels, the third sub-pixels G being green sub-pixels, an area of each of the second sub-pixels B is greater than an area of each of the first sub-pixels R, and the area of each of the first sub-pixels R is greater than an area of each of the third sub-pixels G.

It should be understood that among organic light-emitting materials per unit area, a luminous brightness of a blue sub-pixel is the lowest, followed by a luminous brightness of a red sub-pixel, and a luminous brightness of a green sub-pixel is the highest. As such, the area of the blue sub-pixel is set to be the largest, followed by that of the red sub-pixel, and the area of the green sub-pixel is set to be the smallest, so as to improve the display uniformity.

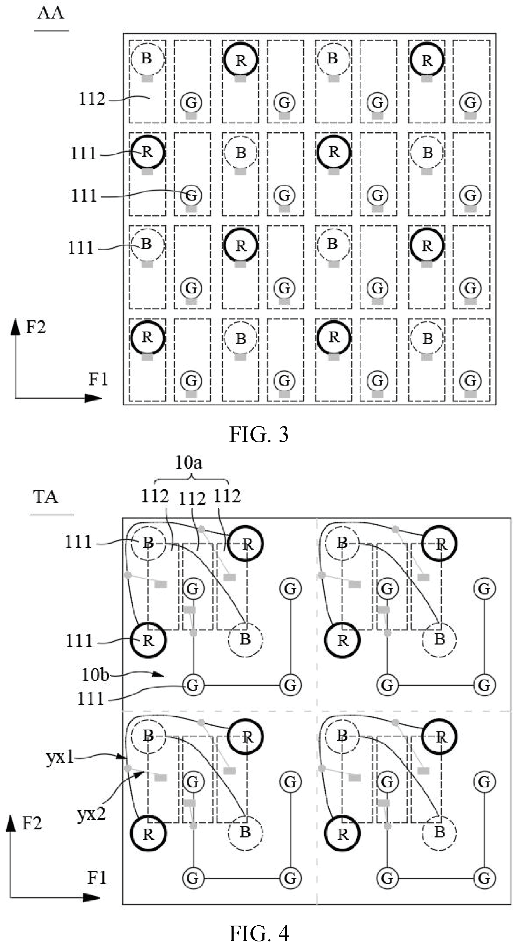

FIG. 3 illustrates a schematic top plan view of the display region AA of the display panel 100 according to one or more embodiments of the present application. As shown in FIG. 3, in the display region AA, each of the sub-pixels 111 is correspondingly connected to one of the pixel circuits 112. Each of the pixel circuits 112 is correspondingly disposed below one of the sub-pixels 111. In the first direction F1, the blue sub-pixels B and the red sub-pixels R are alternately arranged to form color-mixed sub-pixel rows, and a plurality of green sub-pixels G are alternately arranged to form solid color sub-pixel rows. The color-mixed sub-pixel rows and the solid color sub-pixel rows are alternately arranged along the second direction F2. In the second direction F2, the blue sub-pixels B and the red sub-pixels R are alternately arranged to form color-mixed sub-pixel columns, and the plurality of green sub-pixels G are alternately arranged to form solid color sub-pixel columns. The color-mixed sub-pixel columns and the solid color sub-pixel columns are alternately arranged along the first direction F1.

FIG. 4 illustrates a first schematic top plan view of the display light-transmitting region TA of the display panel 100 according to one or more embodiments of the present application. In FIG. 4, an arrangement pattern of the sub-pixels 111 in the display light-transmitting region TA and an arrangement pattern of the sub-pixels 111 in the display region AA are consistent, but is not limited thereto. For example, the arrangement patterns of the sub-pixels 111 in the two regions may also be different.

Optionally, in the display light-transmitting region TA, the first sub-pixels R and the second sub-pixels B are alternately arranged in color-mixed sub-pixel rows along the first direction F1. A plurality of third sub-pixels G are arranged in solid color sub-pixel rows along the first direction F1. The first sub-pixels R and the second sub-pixels B are alternately arranged in color-mixed sub-pixel columns along the second direction F2. The plurality of third sub-pixels G are arranged in solid color sub-pixel columns along the second direction F2. The color-mixed sub-pixel columns and the solid color sub-pixel columns are alternately arranged in the first direction F1. The color-mixed sub-pixel rows and the solid color sub-pixel rows are alternately arranged in the second direction F2.

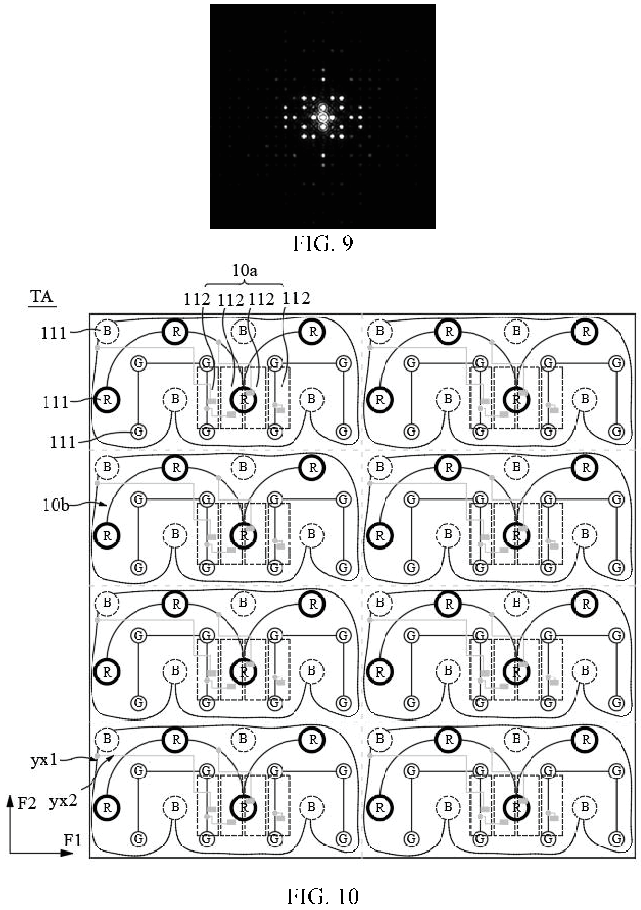

It should be noted that based on an underlying logic of a Sub-Pixel Rendering (SPR) algorithm, applicable driving schemes include types as follows. A first type (as shown in FIG. 4) is that a first pixel circuit pr simultaneously drives two first sub-pixels R, a second pixel circuit pb simultaneously drives two second sub-pixels B, and a third pixel circuit pg simultaneously drives four third sub-pixels G. A second type is that the first pixel circuit pr simultaneously drives two first sub-pixels R, the second pixel circuit pb simultaneously drives two second sub-pixels B, and the third pixel circuit pg simultaneously drives two third sub-pixels G. A third type (as shown in FIG. 10) is that the first pixel circuit pr simultaneously drives four first sub-pixels R, the second pixel circuit pb simultaneously drives four second sub-pixels B, and the third pixel circuit pg simultaneously drives four third sub-pixels G.

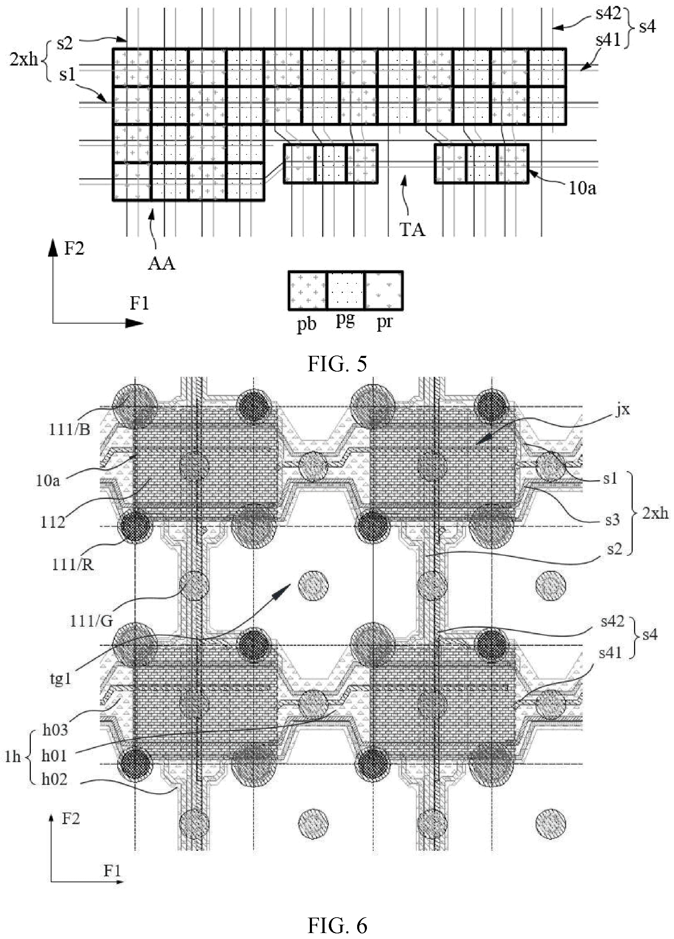

Based on the driving scheme in FIG. 4, referring to FIG. 5, FIG. 5 illustrates a schematic view showing a circuit connection of the display panel 100 according to one or more embodiments of the present application. In FIG. 5, the driving circuit layer 1b includes a plurality of pixel circuits 112 and at least a part of the signal traces 2xh.

The plurality of pixel circuits 112 includes first pixel circuits pr, second pixel circuits pb, and third pixel circuits pg. The first pixel circuits pr drive the first sub-pixels R. The second pixel circuits pb drive the second sub-pixels B. The third pixel circuits pg drive the third sub-pixels G.

In the display region AA, the plurality of pixel circuits 112 are arranged according to an arrangement of the sub-pixels 111. In the display light-transmitting region TA, in the first direction F1, the plurality of pixel circuits 112 include circuit modules 10a, and the pixel circuits 112 of each of the circuit modules 10a are arranged in an order of the first pixel circuit pr, the third pixel circuit pg, and the second pixel circuit pb.

A plurality of signal traces 2xh include a plurality of scanning lines s1, a plurality of data lines s2, and an anode power supply trace s4. The scanning lines s1, the data lines s2, and the anode power supply trace s4 all extend from the display region AA to the display light-transmitting region TA. The anode power supply trace s4 includes a plurality of first trace parts s41 and a plurality of second trace parts s42. The first trace parts s41 are cross-connected to the second trace parts s42 to form a mesh structure.

It should be noted that the scanning lines s1 are connected to the pixel circuits 112 and provide scanning signals SACN for the pixel circuits 112. The data lines s2 are connected to the pixel circuits 112 and provide data signals DATA for the pixel circuits 112. The anode power supply trace s4 is connected to the pixel circuits 112 and provide an anode voltage signal VDD for the pixel circuits 112.

In the display region AA, each of the scanning lines s1 and each of the first trace parts s41 extend along the first direction F1, and each of the data lines s2 and each of the second trace parts s42 extend along the second direction F2.

It should be understood that based on the SPR algorithm, an arrangement of the pixel circuits 112 in the display light-transmitting region TA is the same as the arrangement of a part of even-numbered rows in the display region AA. As such, in the display light-transmitting region TA, the scanning lines s1 and the first trace parts s41 in the even-numbered rows in the display region AA extend to the display light-transmitting region TA and are connected to the pixel circuits 112 arranged in same rows. The data lines s2 and the second trace parts s42 in the solid color sub-pixel columns in the display region AA extend to the display light-transmitting region TA and are connected to the third pixel circuits pg. A data line s2 and a second trace part s42 in one of the color-mixed sub-pixel columns in the display region AA extend to the display light-transmitting region TA and are connected to the first pixel circuit pr. A data line s2 and the second trace part s42 in one of the color-mixed sub-pixel columns in the display region AA extend to the display light-transmitting region TA and are connected to the second pixel circuit pb.

It should be noted that in case where the display panel 100 is single-side gate driving or double-side gate driving, the scanning lines s1 in odd-numbered rows in the display region AA may pass through the display light-transmitting region TA, so as to realize display of the sub-pixels 111 in an entire row, while the scanning lines s1 in the odd-numbered rows are not connected to the circuit modules 10a in the display light-transmitting region TA. In case where the display panel 100 is the double-sided gate driving, without the scanning lines s1 of the odd-numbered rows in the display region AA passing through the display light-transmitting region TA, the display of the sub-pixels 111 in an entire row can be realized.

The extra data lines s2 corresponding to the display light-transmitting region TA in the display region AA may pass through the display light-transmitting region TA, so as to realize display of in an entire column. Without the extra data lines s2 passing through the display light-transmitting region TA, the display of the sub-pixels 111 in an entire column can be realized.

The first trace parts s41 corresponding to odd-numbered rows of the display light-transmitting region TA in the display region AA may or may not pass through the display light-transmitting region TA. The extra second trace parts s42 corresponding to the display light-transmitting region TA in the display region AA may or may not pass through the display light-transmitting region TA.

It should be understood that FIG. 4 and FIG. 5 illustrate merely one embodiment of the present application, but is not limited thereto.

FIG. 6 illustrates a schematic enlarged view in FIG. 4. In FIG. 4 and FIG. 6, the plurality of sub-pixels 111 are disposed in the display light-transmitting region TA. A plurality of circuit modules 10a are disposed in the display light-transmitting region TA. Each of the circuit modules 10a includes at least three pixel circuits 112. Each of the pixel circuits 112 is connected to at least two sub-pixels 111. The plurality of signal traces 2xh extend from the display region AA to the display light-transmitting region TA. The signal traces 2xh are configured to provide electrical signals to the pixel circuits 112.

It should be understood that the at least three pixel circuits 112 are gathered together to form a circuit module 10a to save a layout area of the pixel circuits 112. The pixel circuits 112 are configured to drive the sub-pixels 111 to emit light. Each of the pixel circuits 112 may be one of a 7T1C circuit, a 6T1C circuit, a 5T1C circuit, and a 3T1C circuit. The pixel circuits 112 are conventional circuits, which will not be repeated herein.

It may be understood that, in the display panel 100 of the embodiments of the present application, the circuit modules 10a correspondingly connected to the sub-pixels 111 in the display light-transmitting region TA are disposed in the display light-transmitting region TA, so as to shorten a signal transmission distance from the circuit modules 10a to the sub-pixels 111, and improve uniformity of duration of the sub-pixels 111 in the display light-transmitting region TA to receive signals.

Moreover, each of the pixel circuits 112 is connected to the at least two sub-pixels 111, and thus at least one pixel circuit 112 can be saved, so as to increase a light-transmitting area of the display light-transmitting region TA.

Optionally, anodes of all of the sub-pixels 111 connected to a same one of the pixel circuits 112 are connected through a first lead yx1, and one of the pixel circuits 112 is connected to the first lead yx1 or one of the anodes through a second lead yx2, so that one of the pixel circuit 112 drives at least two sub-pixels 111 to emit light.

Optionally, in some embodiments, the first lead yx1 and the second lead yx2 are both transparent leads, so as to increase the light-transmitting area of the display light-transmitting region TA, thereby further improving light transmittance of the display light-transmitting region TA. For example, a material of the first lead yx1 and the second lead yx2 may be a metal oxide or a transparent metal, such as indium tin oxide, indium zinc oxide, silver, and platinum.

In the display panel 100 from a top-view perspective, the plurality of signal traces 2xh intersect to form a plurality of intersection regions jx. At least some circuit modules 10a of the plurality of circuit modules 10a are disposed in the intersection regions jx. Each of the circuit modules 10a is correspondingly disposed overlapping some sub-pixels 111 of the plurality of sub-pixels 111. The signal traces 2xh are disposed partially overlapping some sub-pixels 111 of the plurality of sub-pixels 111.

In the display panel 100 of the embodiments of the present application, the circuit modules 10a are disposed in the intersection regions jx, so that an arrangement area of the circuit modules 10a and the signal traces 2xh can be reduced to improve the light transmittance of the display light-transmitting region TA. In addition, some of the sub-pixels 111 overlap the circuit modules 10a and some of the sub-pixels 111 overlap the signal traces 2xh, so that the light-transmitting area is improved, thereby improving the light transmittance of the display light-transmitting region TA.

Optionally, in some embodiments of the present application, the plurality of signal traces 2xh further include a plurality of reset traces s3.

An extending direction of each of the scanning lines s1 and an extending direction of each of the reset traces s3 both intersect with an extending direction of each of the data lines 1s2. Intersection points between the first trace parts s41 and the second trace parts s42 are located in the intersection regions jx. The data lines s2 and the second trace parts s42 are arranged in the first direction F1. The scanning lines s1, the reset traces s3, and the first trace parts s41 are arranged in the second direction F2 interesting with the first direction F1.

It should be noted that the reset traces s3 are connected to the pixel circuits 112 and provide reset signals VI to the pixel circuits 112.

In the first direction F1, each of the scanning lines s1 is connected to the plurality of pixel circuits 112, and each of the reset traces s3 is connected to the plurality of pixel circuits 112. In the second direction F2, each of the data lines s2 is connected to the plurality of pixel circuits 112. The anode power trace s4 has a mesh structure. The anode power trace s4 can be connected to the plurality of pixel circuits 112, e.g., can be connected to all of the pixel circuits 112.

Optionally, the first trace parts s41 and the plurality of second trace parts s42 of the anode power supply trace s4 may be arranged in a same layer, or may be arranged in different layers and connected though via holes. Both the scanning lines s1 and the reset traces s3 are arranged in different layers from the data lines s2 to avoid short circuits.

It should be noted that as long as the scanning lines s1, the data lines s2, the reset traces s3, and the anode power supply trace s4 are not short-circuited to each other, film positions and connection modes of the scanning lines s1, the data lines s2, the reset traces s3, and the anode power supply trace s4 are not limited by the present application.

Optionally, in some embodiments, at least one of the data lines s2 and the second trace parts s42 is disposed partially overlapping some sub-pixels 111 of the plurality of sub-pixels 111. At least one of the scanning lines s1, the reset traces s3, and the first trace parts s41 is disposed partially overlapping some sub-pixels 111 of the plurality of sub-pixels 111.

It can be understood that since the sub-pixels 111 also have light shielding properties, the sub-pixels 111 are arranged on at least one of the scanning lines s1, the data lines s2, the reset traces s3, and the anode power supply trace s4, so as to overlap a light shielding area, thereby increasing the light-transmitting area.

Optionally, in some embodiments of the present application, the plurality of sub-pixels 111 include a plurality of minimum repeating units 10b arranged in an array. Each of the minimum repeating units 10b includes at least two first sub-pixels R, at least two second sub-pixels B, and at least two third sub-pixels G. The first sub-pixels R, the second sub-pixels B, and the third sub-pixels G have different light-emitting colors from each other.

Each of the circuit modules 10a is correspondingly connected to one of the minimum repeating units 10b. In each of the circuit modules, one pixel circuit 112 of the plurality of pixel circuits 112 is connected to at least two of the first sub-pixels R. Another one pixel circuit 112 of the plurality of pixel circuits 112 is connected to at least two of the second sub-pixels B. Yet another one pixel circuit 112 of the plurality of pixel circuits 112 is connected to at least two of the third sub-pixels G.

It can be understood that the more sub-pixels 111 connected to one of the pixel circuits 112, the more pixel circuits 112 are saved, and the more light-transmitting area is.

Optionally, in some embodiments of the present application, each of the circuit modules 10a is correspondingly disposed in a region where one of the minimum repeating units 10b is located.

It can be understood that each of the circuit modules 10a is disposed correspondingly to one of the minimum repeating units 10b, so that each of the circuit modules 10a can transmit signals to one of the minimum repeating unit 10b connected thereto. Moreover, the circuit modules 10a are uniformly arranged in the display light-transmitting area TA, so as to improve the uniformity of the duration of driving the sub-pixels.

Optionally, in some embodiments of the present application, each of the minimum repeating units 10b includes two first sub-pixels R, two second sub-pixels B, and four third sub-pixels G. Each of the circuit modules 10a includes three pixel circuits 112. One of the three pixel circuits 112 is connected to the two first sub-pixels R, another one of the three pixel circuits 112 is connected to the two second sub-pixels B, and yet another one of the three pixel circuits 112 is connected to the four third sub-pixels G.

Combined with FIG. 5, that is to say, the first pixel circuit pr simultaneously drives the two first sub-pixels R. The second pixel circuit pb simultaneously drives the two second sub-pixels B. The third pixel circuit pg simultaneously drives the four third sub-pixels G.

Optionally, in each of the minimum repeating units 10b of the display panel 100 from the top-view perspective (as shown in FIG. 6), the two first sub-pixels R and the two second sub-pixels G are arranged at four corner regions of a corresponding one of the circuit modules 10a. The two first sub-pixels R and the two second sub-pixels G are arranged partially overlapping the corresponding one of the circuit modules 10a, respectively. The corresponding one of the circuit modules 10a is disposed overlapping one of the four third sub-pixels G. At least one of the data lines s2 and the second trace parts s42 is disposed partially overlapping another one of the four third sub-pixels G. At least one of the scanning lines s1, the reset traces s3, and the first trace parts s41 is disposed partially overlapping yet another one of the four third sub-pixels G.

The light-transmitting area of the light-transmitting region TA can be increased through above-mentioned design, thereby improving the light transmittance.

Continuing to refer to FIG. 6, optionally, in some embodiments of the present application, the display panel 100 further includes a light shielding layer 1h located in the display light-transmitting region TA. The light shielding layer 1h is located on a side of the circuit modules 10a away from the sub-pixels 111. The light shielding layer 1h includes a plurality of first light shielding parts h01 extending along the first direction F1 and a plurality of second light shielding parts h02 extending along the second direction F2. The plurality of first light shielding parts h01 and the plurality of second light shielding parts h02 are cross-connected to form a plurality of light-transmitting openings tg1. Third light shielding parts h03 are formed at intersection positions between the first light shielding parts h01 and the second light shielding parts h02.

In the display light-transmitting region TA of the display panel 100 from the top-view perspective, the scanning lines s1, the reset traces s3, and the first trace parts s41 are all disposed overlapping the first light shielding parts h01. The data lines s2 and the second trace parts s42 are both disposed overlapping the second light shielding parts h02. The circuit modules 10a are disposed overlapping the third light shielding parts h03.

It should be noted that the patterned light shielding layer 1h is disposed on a side of the driving circuit layer 1b close to the substrate 1a and shields the circuit modules 10a and the signal traces 2xh, so that a risk of light emitted by the camera module irradiating the thin film transistors of the circuit modules 10a can be reduced, thereby improving stability of the circuit modules 10a. Moreover, a risk that optical signals transmitted from the camera module are reflected back to the receiver by the circuit modules 10a and the signal traces 2xh is reduced, which could otherwise result in a decrease in recognition accuracy. Secondly, the light shielding layer 1h blocks the circuit module 10a and the signal trace 2xh, so as to reduce a risk of stray light entering the camera module.

Optionally, in some embodiments, the plurality of the sub-pixels 111 are arranged in rows along the first direction F1. The plurality of the sub-pixels 111 are arranged in columns along the second direction F2. One row of the sub-pixels 111 in every adjacent four of the rows of the sub-pixels 111 are disposed overlapping the first light shielding parts h01, and one column of the sub-pixels 111 in every at least adjacent four of the columns of the sub-pixels 111 are disposed overlapping the circuit modules 10a.

It can be understood that the light shielding layer 1h overlaps some of the sub-pixels 111, so that the light-transmitting area can be increased, thereby increasing the light transmittance.

Optionally, a material of the light shielding layer 1h may be a black organic material or a metal material, such as molybdenum and a titanium/molybdenum combination.

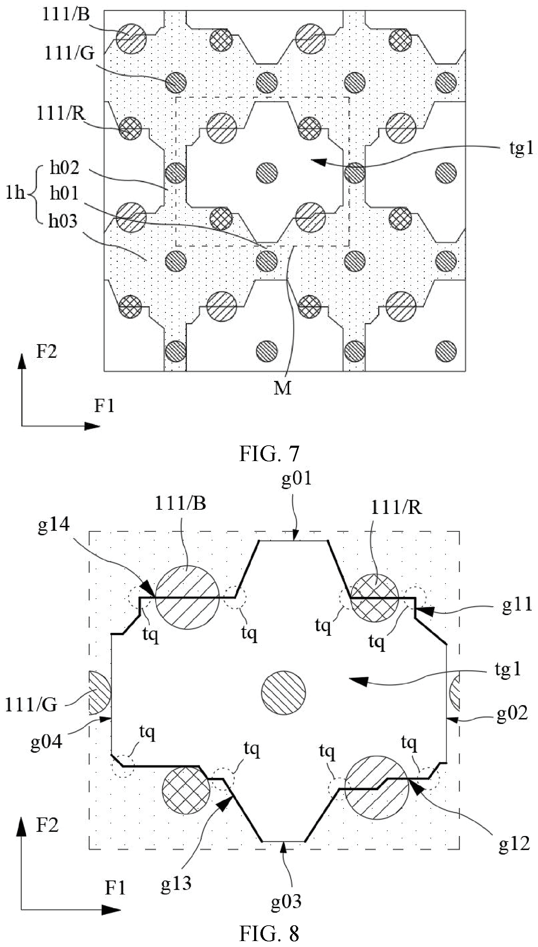

Referring to FIG. 7, FIG. 7 illustrates a schematic layout view of the light shielding layer 1h and the sub-pixels 111 in the light-transmitting region TA of the display panel 100 according to one or more embodiments of the present application.

In some embodiments of the present application, based on each of the minimum repeating units 10b including two first sub-pixels R, two second sub-pixels B, and four third sub-pixels G. The first sub-pixels R and the second sub-pixels B are alternately arranged in color-mixed sub-pixel rows along the first direction F1. The plurality of third sub-pixels G are alternately arranged in solid color sub-pixel rows along the first direction F1. The first sub-pixels R and the second sub-pixels B are alternately arranged in color-mixed sub-pixel columns along the second direction F2. The plurality of third sub-pixels G are alternately arranged in solid color sub-pixel columns along the second direction F2. The color-mixed sub-pixel columns and the solid color sub-pixel columns are alternately arranged in the first direction F1. The color-mixed sub-pixel rows and the solid color sub-pixel rows are alternately arranged in the second direction F2.

That is, based on the embodiments corresponding to FIG. 4 and FIG. 6, in the display light-transmitting region TA of the display panel 100 from the top-view perspective, one row of every adjacent two of the solid color sub-pixel rows is disposed overlapping the first light shielding parts h01. One column of every adjacent two of the solid color sub-pixel columns is disposed overlapping the second light shielding parts h02. Each of the third light shielding parts h03 is disposed overlapping the two of the first sub-pixels R and the two of the second sub-pixels B. Each of the third light shielding parts h03 is disposed overlapping one of the four third sub-pixels G.

It can be understood that the third light shielding parts h03 merely occupies a layout area of four sub-pixels 111, and the third light shielding parts h03 does not fully cover the four sub-pixels 111 in the four corner regions, so as to improve the light-transmitting area.

Referring to FIG. 8, FIG. 8 illustrates a schematic enlarged view of a part M in FIG. 7.

Optionally, in some embodiments of the present application, in the display light-transmitting region TA of the display panel 100 from the top-view perspective, a pattern of each of the light-transmitting openings tg1 is an asymmetric pattern.

It can be understood that the optical signals transmitted from the camera module will have a diffraction effect when passing through the light-transmitting openings tg1 of the light-shielding layer 1h, and the diffraction effect is closely related to an interference phenomenon when light waves encounter a periodic structure. As such, in the embodiments of the present application, the light-transmitting openings tg1 with the asymmetric pattern are provided to destroy a periodic structure of the light-transmitting openings tg1 so as to reduce the occurrence of the interference, thereby reducing the diffraction effect. Moreover, a shape of the asymmetric pattern can change distribution and intensity of diffracted light. This is conducive to reduce the intensity of the diffracted light in a specific direction, and reduce unnecessary diffracted light to reduce the diffraction effect.

Optionally, in some embodiments of the present application, the pattern of each of the light-transmitting openings tg1 includes a first edge g01, a second edge g02, a third edge g03, a fourth edge g04, a first corner g11, a second corner g12, a third corner g13, and a fourth corner g14. The first edge g01 and the third edge g03 are oppositely disposed and extend along the first direction F1. The second edge g02 and the fourth edge g04 are oppositely disposed and extend along the second direction F2. The first corner g11 is connected to the first edge g01 and the second edge g02. The second corner g12 is connected to the second edge g02 and the third edge g03. The third corner g13 is connected to the third edge g03 and the fourth edge g04. The fourth corner g14 is connected to the fourth edge g04 and the first edge g01.

Any two of the first corner g11, the second corner g12, the third corner g13, and the fourth corner g14 are disposed asymmetrically with each other.

It can be understood that any two of the first corner g11, the second corner g12, the third corner g13, and the fourth corner g14 are disposed asymmetrically with each other, so as to reduce the intensity of the diffracted light in a diagonal direction, thereby reducing the diffraction effect.

Optionally, in some embodiments of the present application, at least one of the first corner g11, the second corner g12, the third corner g13, and the fourth corner g14 includes at least one sub-corner tq. A number of sub-corners tq of the second corner g12 is different from a number of sub-corners tq of the third corner g13, and/or, a number of sub-corners tq of the first corner g11 is different from a number of sub-corners tq of the fourth corner g14.

It can be understood that different numbers of the sub-corners tq are provided in the first corner g11, the second corner g12, the third corner g13, and the fourth corner g14, so that any two of the first corner g11, the second corner g12, the third corner g13, and the fourth corner g14 are arranged asymmetrically with each other.

Moreover, the sub-corners tq are provided, which have an effect on light scattering, so as to further improve the distribution of the intensity of the diffracted light in the diagonal direction, thereby reducing the diffraction effect.

In some embodiments, a width of the third corner g13 in the second direction F2 is different from a width of the second corner g12 in the second direction F2, and/or, a width of the first corner g11 in the second direction F2 is different from a width of the fourth corner g14 in the second direction F2. Thus the distribution of the intensity of the diffracted light in the diagonal direction can be further improved, thereby reducing the diffraction effect.

In some embodiments, a total length of the third corner g13 is different from a total length of the second corner g12, and/or, a total length of the first corner g11 is different from a total length of the fourth corner g14, so as to further improve the distribution of the intensity of the diffracted light in the diagonal direction, thereby reducing the diffraction effect.

In some embodiments, an included angle of the sub-corner tq of the third corner g13 is different from an included angle of the sub-corner tq of the second corner g12, and/or, an included angle of the sub-corner tq of the first corner g11 is different from an included angle of the sub-corner tq of the fourth corner g14, so as to further improve the distribution of the intensity of the diffracted light in the diagonal direction, thereby reducing the diffraction effect.

Referring to FIG. 9, FIG. 9 is a diffraction simulation diagram based on the light shielding layer in FIG. 7 and FIG. 8. It can be seen from FIG. 9 that a diffraction pattern is clear.

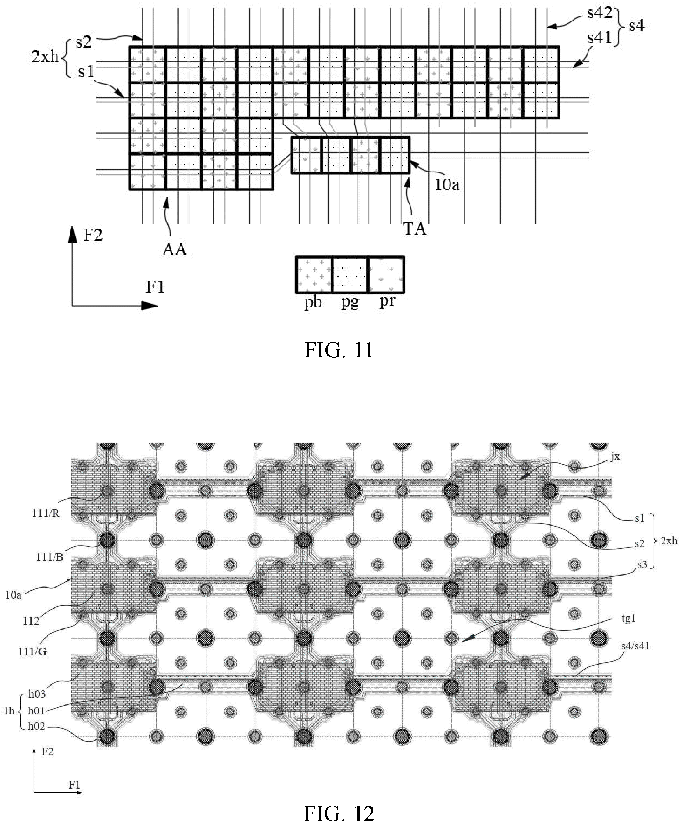

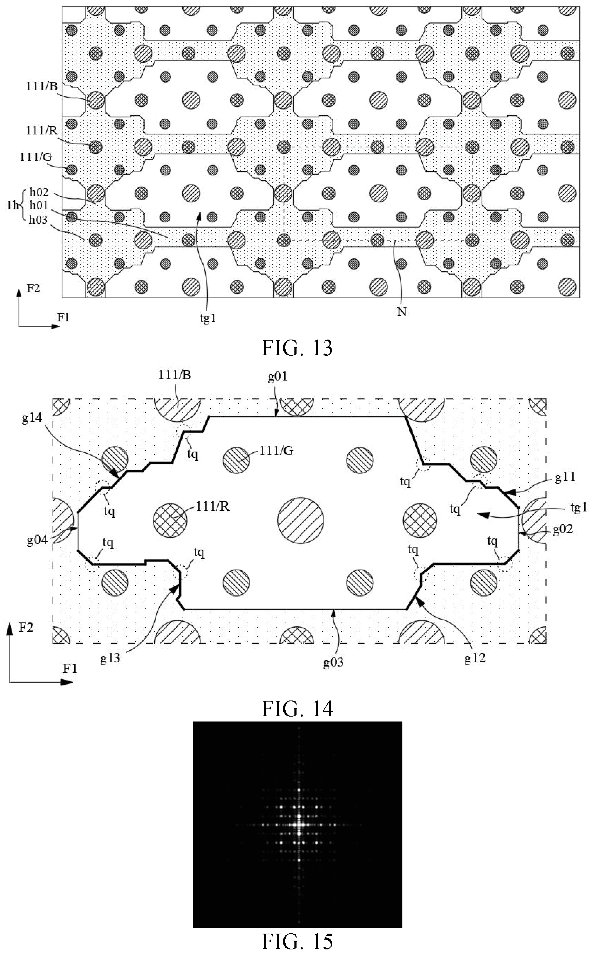

FIG. 10 illustrates a second schematic top plan view of the display light-transmitting region TA of the display panel 100 according to some embodiments of the present application. FIG. 11 illustrates a schematic view showing a circuit connection of the display panel 100 corresponding to the embodiments in FIG. 10. FIG. 12 is a schematic partial enlarged view in FIG. 10. FIG. 13 is a schematic view of retained light shielding layer 1h and sub-pixels 111 in FIG. 12. FIG. 14 illustrates a schematic enlarged view of a part N in FIG. 13.

In FIG. 10 to FIG. 13, parts different from those of the above-described embodiments will be described to avoid redundancy.

Referring to FIG. 10 and FIG. 11, each of the minimum repeating units 10b includes two first sub-pixels R, two second sub-pixels B, and four third sub-pixels G. Each of the circuit modules 10a includes four pixel circuits 112. One of the four pixel circuits 112 is connected to the four first sub-pixels R, and another one of the four pixel circuits 112 is connected to the four second sub-pixels B. The remaining two pixel circuits 112 are each connected to four third sub-pixels G, respectively.

That is, in one of the circuit modules 10a, the first pixel circuit pr simultaneously drives four first sub-pixels R, the second pixel circuit pb simultaneously drives four second sub-pixels B, and the two third pixel circuits pg each drive four third sub-pixels G, respectively.

In FIG. 11, in the display region AA, the plurality of pixel circuits 112 are arranged according to the arrangement of the sub-pixels 111. In the display light-transmitting region TA, in the first direction F1, the plurality of pixel circuits 112 include circuit modules 10a, and the pixel circuits of each of the circuit modules 10a are arranged in an order of the first pixel circuit pr, the third pixel circuit pg, and the second pixel circuit pb.

Referring to FIG. 12, in some embodiments of the present application, in each of the minimum repeating units 10b of the display panel 100 from the top-view perspective, one of the four first sub-pixels R is disposed overlapping a corresponding one of the circuit modules 10a. Two of the four second sub-pixels B and four of the eight third sub-pixels G are disposed partially overlapping the corresponding one of the circuit modules 10a, respectively. At least one of the data lines s2 and the second trace parts s42 is disposed partially overlapping another one of the second sub-pixels B. At least one of the scanning lines s1, the reset traces s3, and the first trace parts s41 is disposed partially overlapping another one of the first sub-pixels R. At least one of the scanning lines s1, the reset traces s3, and the first trace parts s41 is disposed partially overlapping the two, partially overlapping the corresponding one of the circuit modules 10a, of the four second sub-pixels B.

It can be understood that, since the area of the second sub-pixel B is the largest, more second sub-pixels B are arranged on the signal traces 2xh to reduce the light shielding area, and further improve the light-transmitting area of the display light-transmitting region TA, thereby improving the light transmittance.

Referring to FIG. 12, it should be noted that the second trace parts s42 are not shown in FIG. 12, but it does not mean that there is no second trace part s42. For example, the second trace parts s42 are connected to the first trace parts s41 through the via holes connecting to other film layers.

Referring to FIG. 13, optionally, in some embodiments of the present application, since each of the minimum repeating units 10b includes four first sub-pixels R, four second sub-pixels G, and eight third sub-pixels B. The first sub-pixels R and the second sub-pixels G are alternately arranged in color-mixed sub-pixel rows along the first direction F1. The plurality of third sub-pixels G are alternately arranged in solid color sub-pixel rows along the first direction F1. The first sub-pixels R and the second sub-pixels G are alternately arranged in color-mixed sub-pixel columns along the second direction F2. The plurality of third sub-pixels G are alternately arranged in solid color sub-pixel columns along the second direction F2. The color-mixed sub-pixel columns and the solid color sub-pixel columns are alternately arranged in the first direction F1. The color-mixed sub-pixel rows and the solid color sub-pixel rows are alternately arranged in the second direction F2.

That is, based on the embodiments corresponding to FIG. 10 and FIG. 12, in the display light-transmitting region TA of the display panel 100 from the top-view perspective, one row of every adjacent two of the solid color sub-pixel rows is disposed overlapping the first light shielding parts h01. One column of every adjacent two of the solid color sub-pixel columns is disposed overlapping the second light shielding parts h02. Each of the third light shielding parts h03 is disposed overlapping one of the four first sub-pixels R, two of the four second sub-pixels B, and four of the eight third sub-pixels G.

It can be understood that the first light shielding parts h01 shield the color-mixed sub-pixel rows having a relative large light-emitting area, the second light shielding parts h02 shield the color-mixed sub-pixel columns having a relative large light-emitting area, and the third light shielding parts h03 shield more sub-pixels 111, so as to increase the light-transmitting area.

Referring to FIG. 14, any two of the first corner g11, the second corner g12, the third corner g13, and the fourth corner g14 are disposed asymmetrically with each other. At least one of the first corner g11, the second corner g12, the third corner g13, and the fourth corner g14 includes at least one sub-corner tq. The number of the sub-corners tq of the second corner g12 is different from the number of the sub-corners tq of the third corner g13, and/or, the number of the sub-corners tq of the first corner g11 is different from the number of the sub-corners tq of the fourth corner g14.

In FIG. 14, any two of the number of the sub-corners of the first corner g11, the number of the sub-corners of the second corner g12, the number of the sub-corners of the third corner g13, and the number of the sub-corners of the fourth corner g14 are different from each other.

Referring to FIG. 15, FIG. 15 is a diffraction simulation diagram based on the light shielding layer in FIG. 13. It can be seen from FIG. 15 that the diffraction pattern is clear.

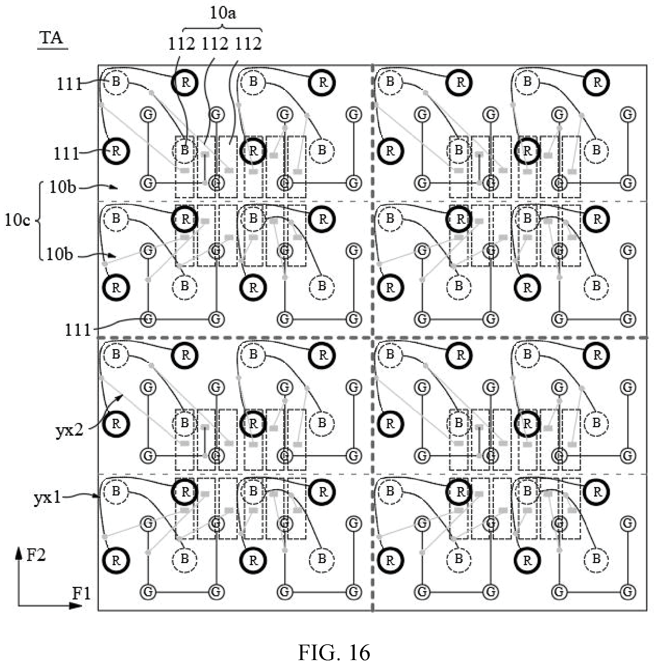

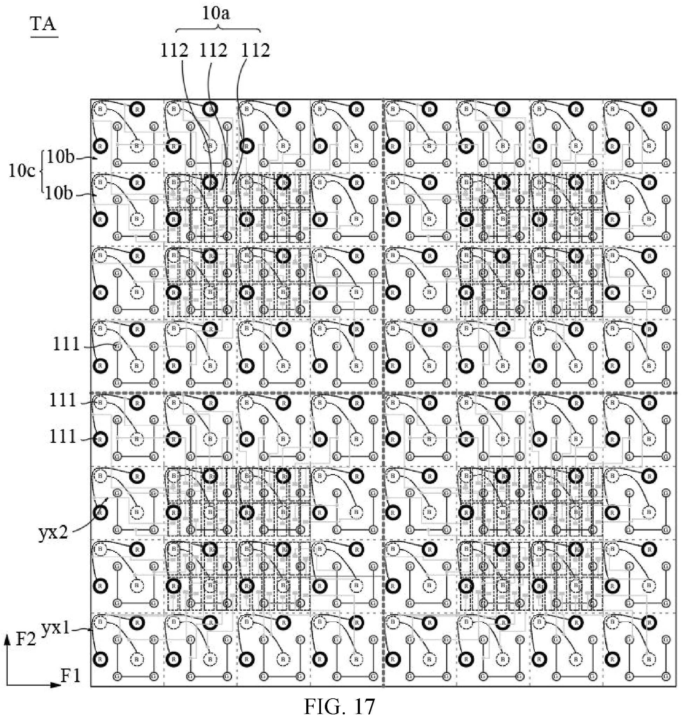

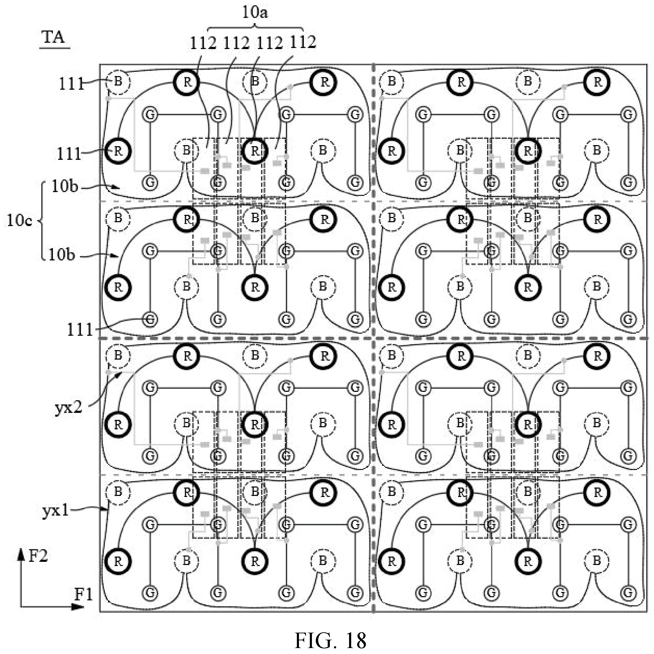

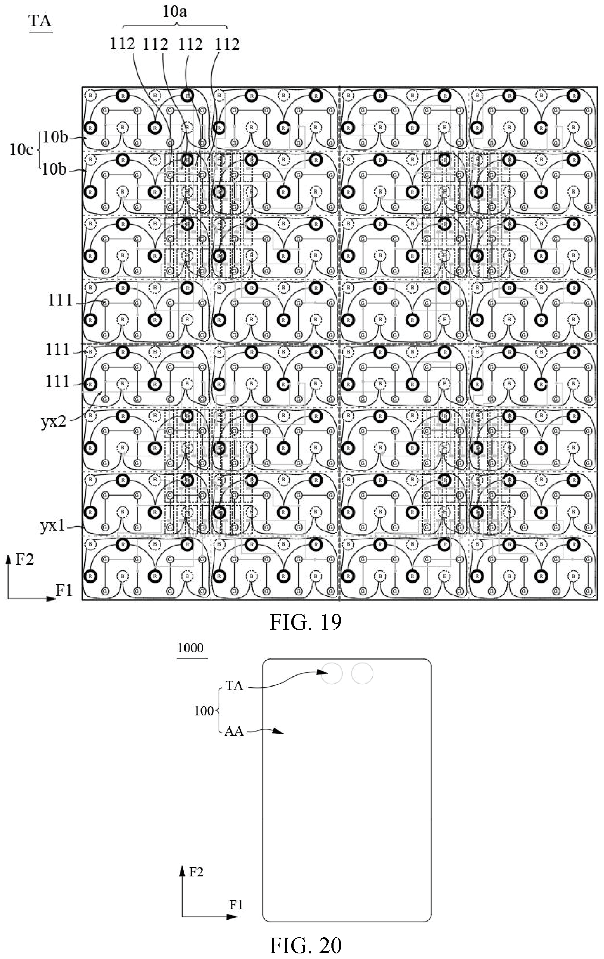

FIG. 16 illustrates a third schematic top plan view of the display light-transmitting region TA of the display panel 100 according to some embodiments of the present application. FIG. 17 illustrates a fourth schematic top plan view of the display light-transmitting region TA of the display panel 100 according to some embodiments of the present application. FIG. 18 illustrates a fifth schematic top plan view of the display light-transmitting region TA of the display panel 100 according to some embodiments of the present application. FIG. 19 illustrates a sixth schematic top plan view of the display light-transmitting region TA of the display panel 100 according to some embodiments of the present application.

In FIG. 16 to FIG. 19, parts different from those of the above-described embodiments will be described to avoid redundancy.

It should be noted that FIG. 16 and FIG. 17 are based on a driving architecture in which the first pixel circuit pr simultaneously drives two first sub-pixels R, the second pixel circuit pb simultaneously drives two second sub-pixels B, and the third pixel circuit pg simultaneously drives four third sub-pixels G. FIG. 18 and FIG. 19 are based on a driving architecture in which the first pixel circuit pr simultaneously driving four first sub-pixels R, the second pixel circuit pb simultaneously driving four second sub-pixels B, and the third pixel circuit pg simultaneously driving four third sub-pixels G.

Referring to FIG. 16 to FIG. 19, in some embodiments of the present application, some minimum repeating units 10b of the plurality of the minimum repeating units 10b are arranged in an array to form a maximum repeating unit 10c. The plurality of the circuit modules 10a are arranged in a middle region of the maximum repeating unit 10c.

Optionally, the plurality of circuit modules 10a are arranged along the first direction F1.

The maximum repeating unit 10c shown in FIG. 16 is formed by four minimum repeating units 10b arranged in an array. The maximum repeating unit 10c shown in FIG. 17 is formed by sixteen minimum repeating units 10b arranged in an array. The maximum repeating unit 10c shown in FIG. 18 is formed by two minimum repeating units 10b arranged in an array. The maximum repeating unit 10c shown in FIG. 19 is formed by eight minimum repeating units 10b arranged in an array.

It may be understood that the maximum repeating unit 10c may also be formed from other numbers of the minimum repeating units 10b arranged in an array, such as 24, 32, 36, 40, 48, 56, 60, 64, 72, 80, 84, 96, 112, or 128.

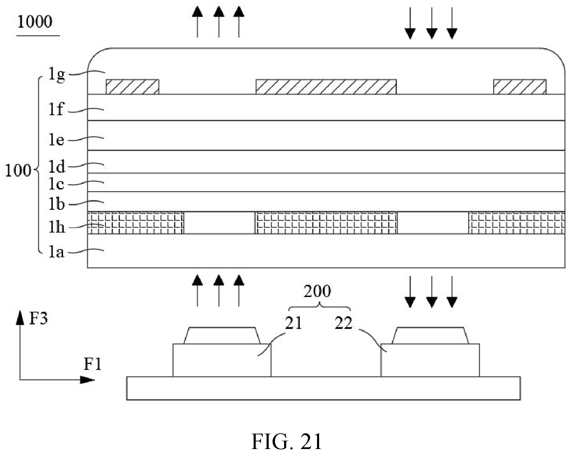

Referring to FIG. 20 and FIG. 21, FIG. 20 is a schematic top plan view of a display device 1000 according to some embodiments of the present application. FIG. 21 is a schematic cross-sectional plan view of the display device 1000 according to some embodiments of the present application.

Accordingly, a display device 1000 is further provided by the embodiments of the present application. The display device 1000 includes a camera module 200 and the display panel 100 as described in any one of the above-mentioned embodiments. The camera module 200 is disposed on a backlight side of the display panel 100 and is disposed corresponding to the display light-transmitting region TA.

The camera module 200 includes a transmitter 21 and a receiver 22. The transmitter 21 is configured to emit the infrared light. The receiver 22 is configured to receive the infrared light reflected from the human face. The transmitter 21 corresponds to one display light-transmitting region TA and the receiver 22 corresponds to another display light-transmitting region TA, but is not limited thereto. For example, one display light-transmitting region TA may provide light-transmitting channels for both the transmitter 21 and the receiver 22. Alternatively, the display panel 100 includes one display light-transmitting region TA, and the camera module 200 is a conventional camera module, such as a single camera module, a multi-camera module, or an infrared camera module.

It should be noted that a structure of the display panel 100 of the display device 1000 of the embodiments of the present application is similar to or the same as the structure of the display panel 100 of any one of the above-mentioned embodiments. Please refer to the descriptions in FIG. 1 to FIG. 19 for details, which will not be repeated herein.

In the display device 1000 of the embodiments of the present application, the circuit modules 10a correspondingly connected to the sub-pixels 111 of the display light-transmitting region TA are disposed in the display light-transmitting region TA, so as to shorten the signal transmission distance from the circuit modules 10a to the sub-pixels 111, and improve the uniformity of the duration of the sub-pixels 111 in the display light-transmitting region TA to receive the signals. Secondly, the circuit modules 10a are disposed at the intersection positions of the signal traces 2xh, so that the arrangement area of the circuit modules 10a and the signal traces 2xh can be reduced to improve the light transmittance of the display light-transmitting region TA. In addition, some of the sub-pixels 111 overlap the circuit modules 10a and some of the sub-pixels 111 overlap the signal traces 2xh, so that the light-transmitting area is improved, thereby improving the light transmittance of the display light-transmitting region TA.

The display panel and the display device provided in the embodiments of the present application are described in detail above. The principle and implementations of the present application are described in this specification by using specific examples. The description about the foregoing embodiments is merely provided to help understand the method and core ideas of the present application. In addition, persons of ordinary skill in the art can make modifications in terms of the specific implementations and application scopes according to the ideas of the present application. In summary, the content of this specification shall not be construed as a limit to the present application.

## Claims

1. A display panel, comprising a display region and a display light-transmitting region, wherein the display region is located on at least one side of the display light-transmitting region, and the display panel further comprises:
a plurality of sub-pixels disposed in the display light-transmitting region;
a plurality of circuit modules disposed in the display light-transmitting region, wherein each of the circuit modules comprises at least three pixel circuits, and each of the pixel circuits is connected to at least two of the sub-pixels; and
a plurality of signal traces extending from the display region to the display light-transmitting region, wherein the signal traces are configured to provide electrical signals to the pixel circuits;
wherein in the display panel from a top-view perspective, the plurality of signal traces intersect to form a plurality of intersection regions, at least some circuit modules of the plurality of circuit modules are disposed in the intersection regions, each of the circuit modules is correspondingly disposed overlapping some sub-pixels of the plurality of sub-pixels, and the signal traces are disposed partially overlapping some sub-pixels of the plurality of sub-pixels.

2. The display panel according to claim 1, wherein the plurality of signal traces comprise a plurality of scanning lines, a plurality of data lines, a plurality of reset traces, and an anode power supply trace, and an extending direction of each of the scanning lines and an extending direction of each of the reset traces both intersect with an extending direction of each of the data lines; wherein the anode power supply trace comprises a plurality of first trace parts and a plurality of second trace parts, the first trace parts and the second trace parts are cross-connected to form a mesh structure, and intersection points between the first trace parts and the second trace parts are located in the intersection regions; and wherein the data lines and the second trace parts are arranged in a first direction, and the scanning lines, the reset traces, and the first trace parts are arranged in a second direction interesting with the first direction; and
wherein at least one of the data lines and the second trace parts is disposed overlapping some sub-pixels of the plurality of sub-pixels, and at least one of the scanning lines, the reset traces, and the first trace parts is disposed overlapping some sub-pixels of the plurality of sub-pixels.

3. The display panel according to claim 2, wherein the plurality of sub-pixels comprise a plurality of minimum repeating units arranged in an array, each of the minimum repeating units comprises at least two first sub-pixels, at least two second sub-pixels, and at least two third sub-pixels, and the first sub-pixels, the second sub-pixels, and the third sub-pixels have different light-emitting colors; and
wherein each of the circuit modules is correspondingly connected to one of the minimum repeating units, in each of the circuit modules, a first pixel circuit of a plurality of pixel circuits is connected to at least two of the first sub-pixels, a second pixel circuit of the plurality of pixel circuits is connected to at least two of the second sub-pixels, and a third pixel circuit of the plurality of pixel circuits is connected to at least two of the third sub-pixels.

4. The display panel according to claim 3, wherein each of the circuit modules is correspondingly disposed in a region where one of the minimum repeating units is located.

5. The display panel according to claim 4, wherein each of the minimum repeating units comprises two of the first sub-pixels, two of the second sub-pixels, and four of the third sub-pixels, each of the circuit modules comprises three of the pixel circuits, the first pixel circuit of the three of the pixel circuits is connected to the two of the first sub-pixels, the second pixel circuit of the three of the pixel circuits is connected to the two of the second sub-pixels, and the third pixel circuit of the three of the pixel circuits is connected to the four of the third sub-pixels; and
wherein in each of the minimum repeating units of the display panel from the top-view perspective, the two of the first sub-pixels and the two of the second sub-pixels are arranged at four corner regions of a corresponding one of the circuit modules, the two of the first sub-pixels and the two of the second sub-pixels are arranged partially overlapping the corresponding one of the circuit modules, respectively, the corresponding one of the circuit modules is disposed overlapping one of the four of the third sub-pixels, at least one of the data lines and the second trace parts is disposed partially overlapping another one of the four of the third sub-pixels, and at least one of the scanning lines, the reset traces, and the first trace parts is disposed partially overlapping yet another one of the four of the third sub-pixels.

6. The display panel according to claim 4, wherein each of the minimum repeating units comprises four of the first sub-pixels, four of the second sub-pixels, and eight of the third sub-pixels, each of the circuit modules comprises four of the pixel circuits, one of the four of the pixel circuits is connected to the four of the first sub-pixels, another one of the four of the pixel circuits is connected to the four of the second sub-pixels, and remaining two of the four of the pixel circuits are each connected to four of the eight of the third sub-pixels; and
wherein in each of the minimum repeating units of the display panel from the top-view perspective, one of the four of the first sub-pixels is disposed overlapping a corresponding one of the circuit modules, two of the four of the second sub-pixels and four of the eight of the third sub-pixels are disposed partially overlapping the corresponding one of the circuit modules, respectively, at least one of the data lines and the second trace parts is disposed partially overlapping another one of the four of the second sub-pixels, at least one of the scanning lines, the reset traces, and the first trace parts is disposed partially overlapping another one of the four of the first sub-pixels, at least one of the scanning lines, the reset traces, and the first trace parts is disposed partially overlapping the two, partially overlapping the corresponding one of the circuit modules, of the four of the second sub-pixels.

7. The display panel according to claim 4, wherein the display panel further comprises a light shielding layer located in the display light-transmitting region, the light shielding layer is located on a side of the circuit modules away from the sub-pixels, the light shielding layer comprises a plurality of first light shielding parts extending along the first direction and a plurality of second light shielding parts extending along the second direction, the plurality of first light shielding parts and the plurality of second light shielding parts are cross-connected to form a plurality of light-transmitting openings, and a plurality of third light shielding parts are formed at intersection positions between the first light shielding parts and the second light shielding parts; and
wherein in the display light-transmitting region of the display panel from the top-view perspective, the scanning lines, the reset traces, and the first trace parts are all disposed overlapping the first light shielding parts, the data lines and the second trace parts are both disposed overlapping the second light shielding parts, and the circuit modules are disposed overlapping the third light shielding parts.

8. The display panel according to claim 7, wherein the plurality of the sub-pixels are arranged in rows along the first direction, the plurality of the sub-pixels are arranged in columns along the second direction, one row of the sub-pixels in every adjacent four of the rows of the sub-pixels is disposed overlapping the first light shielding parts, and one column of the sub-pixels in every at least adjacent four of the columns of the sub-pixels is disposed overlapping the circuit modules.

9. The display panel according to claim 8, wherein based on each of the minimum repeating units comprising two of the first sub-pixels, two of the second sub-pixels, and four of the third sub-pixels, the first sub-pixels and the second sub-pixels are alternately arranged in color-mixed sub-pixel rows along the first direction, a plurality of third sub-pixels are alternately arranged in solid color sub-pixel rows along the first direction, the first sub-pixels and the second sub-pixels are alternately arranged in color-mixed sub-pixel columns along the second direction, a plurality of third sub-pixels are alternately arranged in solid color sub-pixel columns along the second direction, the color-mixed sub-pixel columns and the solid color sub-pixel columns are alternately arranged in the first direction, and the color-mixed sub-pixel rows and the solid color sub-pixel rows are alternately arranged in the second direction; and
wherein in the display light-transmitting region of the display panel from the top-view perspective, one row of every adjacent two of the solid color sub-pixel rows is disposed overlapping the first light shielding parts, one column of every adjacent two of the solid color sub-pixel columns is disposed overlapping the second light shielding parts, each of the third light shielding parts is disposed partially overlapping the two of the first sub-pixels and the two of the second sub-pixels, and each of the third light shielding parts is disposed overlapping one of the four of the third sub-pixels.

10. The display panel according to claim 8, wherein based on each of the minimum repeating units comprising four of the first sub-pixels, four of the second sub-pixels, and eight of the third sub-pixels, the first sub-pixels and the second sub-pixels are alternately arranged in color-mixed sub-pixel rows along the first direction, a plurality of third sub-pixels are alternately arranged in solid color sub-pixel rows along the first direction, the first sub-pixels and the second sub-pixels are alternately arranged in color-mixed sub-pixel columns along the second direction, a plurality of third sub-pixels are alternately arranged in solid color sub-pixel columns along the second direction, the color-mixed sub-pixel columns and the solid color sub-pixel columns are alternately arranged in the first direction, and the color-mixed sub-pixel rows and the solid color sub-pixel rows are alternately arranged in the second direction; and
wherein in the display light-transmitting region of the display panel from the top-view perspective, one row of every adjacent two of the solid color sub-pixel rows is disposed overlapping the first light shielding parts, one column of every adjacent two of the solid color sub-pixel columns is disposed overlapping the second light shielding parts, and each of the third light shielding parts is disposed overlapping one of the four of the first sub-pixels, two of the four of the second sub-pixels, and four of the eight of the third sub-pixels.

11. The display panel according to any one of claims 7 to 10, wherein in the display light-transmitting region of the display panel from the top-view perspective, a pattern of each of the light-transmitting openings is an asymmetric pattern.

12. The display panel according to claim 11, wherein the pattern of each of the light-transmitting openings comprises a first edge, a second edge, a third edge, a fourth edge, a first corner, a second corner, a third corner, and a fourth corner, the first edge and the third edge are oppositely disposed and extend along the first direction, the second edge and the fourth edge are oppositely disposed and extend along the second direction, the first corner is connected to the first edge and the second edge, the second corner is connected to the second edge and the third edge, the third corner is connected to the third edge and the fourth edge, and the fourth corner is connected to the fourth edge and the first edge; and
wherein any two of the first corner, the second corner, the third corner, and the fourth corner are disposed asymmetrically with each other.

13. The display panel according to claim 12, wherein at least one of the first corner, the second corner, the third corner, and the fourth corner comprises at least one sub-comer; a number of sub-corners of the second corner is different from a number of sub-corners of the third corner, and/or, a number of sub-corners of the first corner is different from a number of sub-corners of the fourth corner.

14. The display panel according to claim 13, wherein the number of the sub-corners of the first corner, the number of the sub-corners of the second corner, the number of the sub-corners of the third corner, and the number of the sub-corners of the fourth corner are different from each other.

15. The display panel according to claim 13, wherein an included angle of the sub-corner of the third corner is different from an included angle of the sub-corner of the second corner, and/or, an included angle of the sub-corner of the first corner is different from an included angle of the sub-corner of the fourth corner.

16. The display panel according to claim 13, wherein a total length of the third corner is different from a total length of the second corner, and/or, a total length of the first corner is different from a total length of the fourth corner.

17. The display panel according to claim 13, wherein a width of the third corner in the second direction is different from a width of the second corner in the second direction, and/or, a width of the first corner in the second direction is different from a width of the fourth corner in the second direction.

18. The display panel according to claim 3, wherein some minimum repeating units of the plurality of the minimum repeating units are arranged in an array to form a maximum repeating unit, and the plurality of the circuit modules corresponding to the some minimum repeating units are arranged in a middle region of the maximum repeating unit.

19. The display panel according to any one of claims 3 to 17, wherein the first sub-pixels are red sub-pixels, the second sub-pixels are blue sub-pixels, the third sub-pixels are green sub-pixels, and an area of each of the second sub-pixels is greater than an area of each of the first sub-pixels and an area of each of the third sub-pixels.

20. A display device, comprising a camera module and the display panel according to any one of claims 1 to 19, wherein the camera module is disposed on a backlight side of the display panel, and the camera module is disposed corresponding to the display light-transmitting region.
